(19) Europäisches Patentamt
European Patent Office
Office européen des brevets

(11) **EP 2 755 186 A2**

(12) **EUROPEAN PATENT APPLICATION**

(43) Date of publication:
**16.07.2014 Bulletin 2014/29**

(51) Int Cl.:
**G06T 7/00** (2006.01)

(21) Application number: **13181056.6**

(22) Date of filing: **20.08.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.12.2012 TW 101149083**

(71) Applicant: **Zong Jing Investment**
**Taipei City 114 (TW)**

(72) Inventor: **Hsueh-Ling Wong, Charlene**
**114 Taipei (TW)**

(74) Representative: **Syrtsova, Ekaterina**
**Murgitroyd & Company**
**Scotland House**
**165-169 Scotland Street**
**Glasgow, Strathclyde G5 8PL (GB)**

(54) **Range-finding method and computer program product**

(57)     A range-finding method includes driving a moving member to move relative to a target to a first position, capturing a picture of the target in the first position to obtain a first picture by a picture capturing module on the moving member, feature-analyzing the first picture to obtain a first feature image of the first picture; driving the moving member to move relative to the target from the first position to a second position, capturing a picture of the target in the second position to obtain a second picture by the picture capturing module, feature-analyzing the second picture to obtain a second feature image of the second picture, and by a processing unit, computing a distance between the moving member in the second position and the target according to a distance between the first and second positions and a size change between the first and second feature images.

FIG. 1

**Description**

**Field of the Invention**

The present invention relates to a range-finding method, and more particularly to a range-finding method using a picture change and a computer program product of the range-finding method.

**Background of the Invention**

In the era of rapid development of science and technology, more and more tasks are machine automated. For automatic control in a three-dimensional space, generally information on a relative distance is provided through a laser rangefinder, an infrared rangefinder, or an ultrasonic rangefinder.

According to the principle of the laser rangefinder, a laser transmits a pulse signal to a target, and by using a received reflected signal, a distance to the target may be computed. However, the laser rangefinder is expensive, and is generally applied in the field of range-finding in outer space. Further, the use of laser rangefinder has risk of harming the human body, and is therefore not applicable to range-finding applications regarding relative movement of the human body.

The infrared rangefinder is a device using a modulated infrared ray to perform accurate range-finding. According to the principle of the infrared rangefinder, an infrared ray is transmitted to a target, and a distance is computed according to the time from when the infrared ray is transmitted to when the infrared ray is received after being reflected and the propagation speed of the infrared ray. The infrared rangefinder is cheap, easy to manufacture, and safe, but has low accuracy and poor directionality.

According to the principle of the ultrasonic rangefinder, echoes that are reflected when transmitted ultrasonic waves arrive at a target are continuously detected to measure a time difference between transmission of the ultrasonic wave and reception of the echo, so as to obtain a distance. However, the ultrasonic wave is greatly affected by a surrounding environment, thereby resulting in low accuracy.

**Summary of the Invention**

In an embodiment, a range-finding method includes: driving a moving member to move relative to a target to a first position; in the first position, capturing a picture of the target to obtain a first picture by a picture capturing module disposed on the moving member; performing feature analysis on the first picture to obtain a first feature image of the first picture; driving the moving member to move from the first position relative to the target to a second position; in the second position, capturing a picture of the target to obtain a second picture by the picture capturing module; performing feature analysis on the second picture to obtain a second feature image of the second picture; and by a processing unit, computing a distance between the moving member being in the second position and the target according to a distance between the first position and the second position and a size change between the first feature image and the second feature image. The first feature image and the second feature image are images of a same feature object of the target.

In some embodiments, the size change may be an image magnification between the first feature image and the second feature image.

In some embodiments, the range-finding method may further include: comparing the computed distance with a threshold; and when the distance is smaller than or equal to the threshold, determining that the moving member is positioned.

In some embodiments, the position of the target may be fixed.

In another embodiment, a range-finding method includes: driving a moving member to move relative to a target to a first position, so that a probe disposed on the moving member moves relative to the target; in the first position, capturing a picture of the target and the probe to obtain a first picture by a picture capturing module disposed on the moving member; performing edge analysis on the first picture to obtain a first edge of the first picture; driving the moving member to move relative to the target, so that the probe moves from the first position relative to the target to a second position; in the second position, capturing a picture of the target and the probe to obtain a second picture by the picture capturing module; performing edge analysis on the second picture to obtain a second edge of the second picture; comparing the first edge with the second edge; and when the first edge and the second edge have a specified change amount, determining that the moving member is positioned..

In some embodiments, the step of performing edge analysis on the second picture to obtain a second edge may include: adjusting a size of the second picture according to the first position, the second position, and camera parameters of the picture capturing module; and performing edge analysis on the adjusted second picture to obtain the second edge.

In some embodiments, the step of performing edge analysis on the first picture to obtain a first edge may include: adjusting a size of the first picture according to the first position, the second position, and the camera parameters of the picture capturing module; and performing edge analysis on the adjusted first picture to obtain the first edge.

In some embodiments, the step of comparing the first edge with the second edge may include: comparing the number of pixels of the first edge with the number of pixels of the second edge. When a difference between the number of pixels of the first edge and the number of pixels of the second edge has a specified change amount, it is determined that the moving member is positioned.

In some embodiments, the first edge is an edge of an image of the probe in the first picture, and the second edge is an edge of an image of the probe in the second picture.

Herein, the step of comparing the first edge with the second edge may include: using an image of a feature of the target or a body connected to the probe to make the first picture and the second picture align; and comparing an image position of the first edge with an image position of the second edge. When a difference between the image positions of the first edge and the second edge has the specified change amount, it is determined that the moving member is positioned.

In some embodiments, the step of performing edge analysis on the first picture to obtain the first edge may include: performing feature analysis on the first picture to obtain an image of the probe; expanding an analysis window centered around the image of the probe and having a specified size; and performing edge analysis on a picture block, in the analysis window, of the first picture to obtain the first edge. The specified size is smaller than a picture size of the first picture.

Herein, the step of performing edge analysis on the second picture to obtain a second edge may include: performing feature analysis on the second picture to obtain an image of the probe; expanding the analysis window centered around the image of the probe and having the specified size; and performing edge analysis on a picture block, in the analysis window, of the second picture to obtain the second edge. The specified size is smaller than a picture size of the second picture.

In some embodiments, the range-finding method may further include: when a change between the first edge and the second edge is smaller than the specified change amount, continuing to drive the moving member to move towards the target.

In some embodiments, the range-finding method may further include: when a change between the first edge and the second edge is greater than the specified change amount, driving the moving member to move in a direction leaving the target.

In another embodiment, a computer program product is capable of implementing the aforementioned range-finding method after the program is loaded into and executed by a computer.

In view of the above, in the range-finding method and the computer program product according to the present invention, a picture change is used to accurately and safely determine whether a moving member is positioned.

The present invention is defined in the appended claims.

**Brief description of the drawings**

The present invention will become more fully understood from the detailed description given herein below for illustration only, and thus not limitative of the present invention, wherein:

FIG. 1 is a schematic three-dimensional view of a moving device according to an embodiment of the present invention;
FIG. 2 is a schematic block diagram of a moving device according to an embodiment of the present invention;
FIG. 3 is a flow chart of a range-finding method according to a first embodiment of the present invention;
FIG. 4 and FIG. 5 are flow charts of a range-finding method according to a second embodiment of the present invention;
FIG. 6 is a schematic view of a first embodiment of a first picture;
FIG. 7 is a schematic view of a first embodiment of a second picture;
FIG. 8 is a schematic view of a second embodiment of a first picture;
FIG. 9 is a schematic view of a second embodiment of a second picture;
FIG. 10 is a schematic three-dimensional view of a moving device according to another embodiment of the present invention;
FIG. 11 is a schematic block diagram of a moving device according to another embodiment of the present invention;
FIG. 12 is a flow chart of a range-finding method according to a third embodiment of the present invention;
FIG. 13 and FIG. 14 are flow charts of a range-finding method according to a fourth embodiment of the present invention;
FIG. 15 is a detailed flow chart of an embodiment of Step S361;
FIG. 16 is a detailed flow chart of an embodiment of Step S363;
FIG. 17 is a detailed flow chart of another embodiment of Step S361;

FIG. 18 is a detailed flow chart of another embodiment of Step S363;
FIG. 19 is a detailed flow chart of an embodiment of Step S421;
FIG. 20 is a detailed flow chart of another embodiment of Step S421;
FIG. 21 is a partial flow chart of a range-finding method according to a fifth embodiment of the present invention;
FIG. 22 is a schematic view of a third embodiment of a first picture;
FIG. 23 is a schematic view of a third embodiment of a second picture;
FIG. 24 is a schematic view of a fourth embodiment of a first picture; and
FIG. 25 is a schematic view of a fourth embodiment of a second picture.

## Detailed description

Terms such as "first" and "second" in the following description are used for distinguishing elements, but not used for sequencing or limiting differences between the elements, and not used for limiting the scope of the present invention.

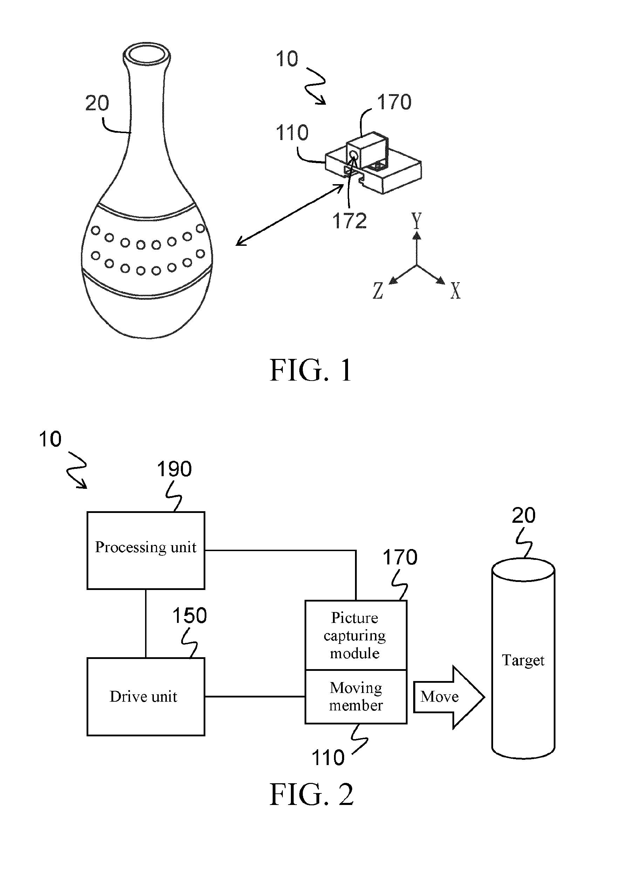

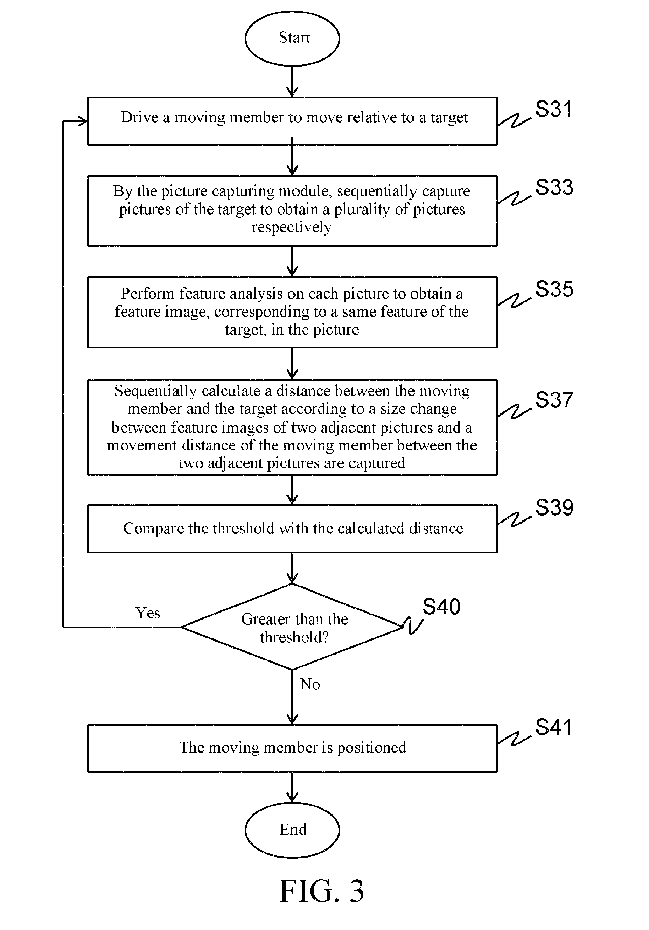

Please refer to FIG. 1 to FIG. 3, in which a moving device 10 includes a moving member 110, a drive unit 150, a picture capturing module 170, and processing unit 190.

The picture capturing module 170 is disposed on the moving member 110, and a sensing surface 172 of the picture capturing module 170 faces a target 20. The drive unit 150 is electrically connected to the moving member 110, and drives the moving member 110 to make the moving member 110 carry the picture capturing module 170 to move relative to the target 20, that is, to move along the Z-axis (Step S31). The processing unit 190 is connected between the drive unit 150 and the picture capturing module 170. The processing unit 190 analyzes pictures captured by the picture capturing module 170, so as to determine a distance between the moving member 110 and the target 20.

In other words, during movement of the moving member 110, the picture capturing module 170 sequentially captures pictures of the target 20 according to a time interval to obtain a plurality of pictures respectively (Step S33).

The processing unit 190 receives the pictures captured by the picture capturing module 170. Herein, the processing unit 190 sequentially analyzes the pictures, so as to sequentially compare an image difference between two consecutively captured pictures. Then, the processing unit 190 determines, according to a comparison result of the image difference, whether the moving member 110 is positioned on the Z-axis. The image difference may be a picture size change (size variance) or an edge change (edge variance).

An implementation of analyzing the picture size change is exemplarily illustrated first. The processing unit 190 sequentially performs feature analysis on each picture to obtain a feature image, corresponding to a same feature of the target 20, in the picture (Step S35). Further, the processing unit 190 sequentially computes a distance between the moving member 110 and the target 20 according to a size change between feature images of two adjacent pictures and a movement distance of the moving member 110 between the two adjacent pictures are captured (Step S37). In some embodiments, the feature image may be a point, a line, a ring, or any complete pattern in the picture.

In some embodiments, the processing unit 190 may control operation of the drive unit 150 according to a threshold. The processing unit 190 compares the computed distance with the threshold (Step S39), so as to determine whether the computed distance is greater than the threshold (Step S40). When the distance is smaller than or equal to the threshold, the processing unit 190 determines that the moving member 110 is positioned on the Z-axis (Step S41). In this case, if the moving member 110 is not required to move for a next positioning point, the processing unit 190 controls the drive unit 150 to stop the moving member 110. If the moving member 110 is required to move for a next positioning point, the processing unit 190 controls the drive unit 150 to drive the moving member 110 to move to the next positioning point, that is, Step S31 is returned to and the steps are executed again. When the distance is greater than the threshold, the processing unit 190 determines that the moving member 110 is not positioned on the Z-axis. In this case, the processing unit 190 further controls the drive unit 150 to drive the moving member 110 to move relative to the target 20, so that the moving member 110 moves to a next position (Step S31).

The control, by the processing unit 190, of a movement position of the moving member 110 on the Z-axis is illustrated below for demonstration.

For convenience of description, in the following, a position, to which the moving member 110 moves first, is called a first position; a next position, to which the moving member 110 moves from the first position, is called a second position; a picture that is captured first (that is, a picture captured at the first position), is called a first picture; and a picture that is captured after the first picture (that is, a picture captured at the second position), is called a second picture.

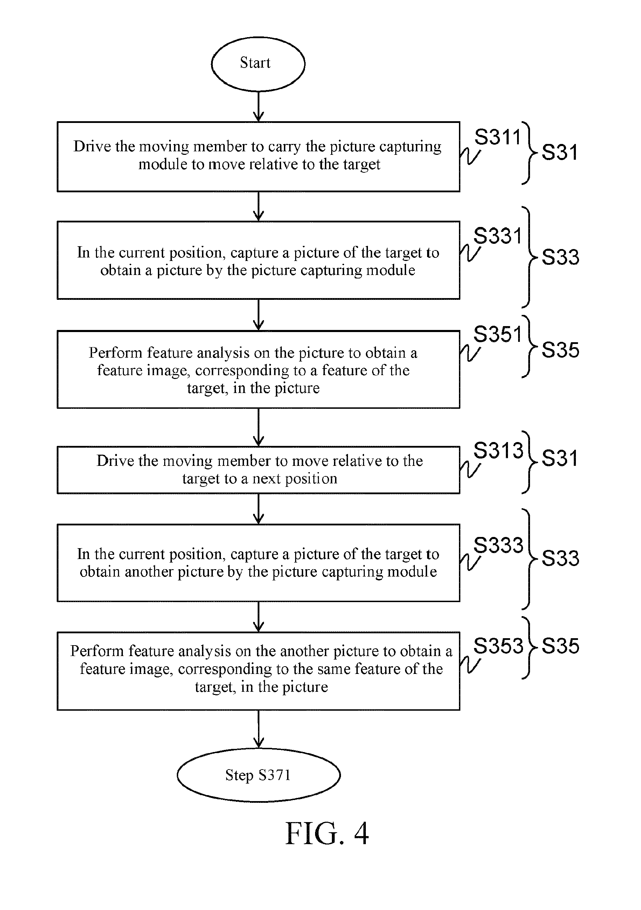

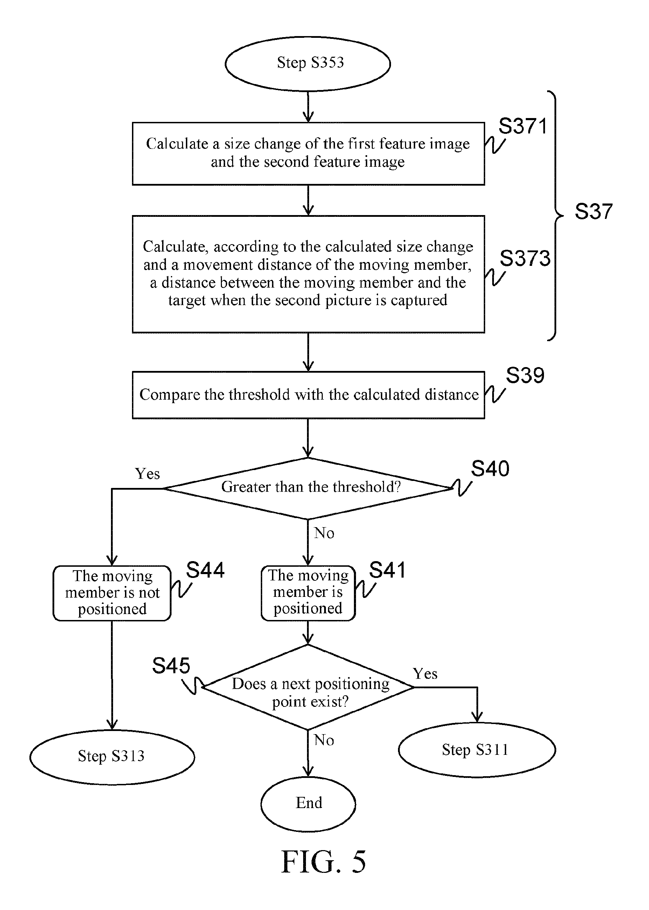

Please refer to FIG. 4 and FIG. 5, in which the processing unit 190 controls the drive unit 150 to drive the moving member 110 to approach the target 20, so that the moving member 110 carries the picture capturing module 170 to move to the first position (Step S311).

In the current position (the first position at the moment), the picture capturing module 170 is used to capture a picture of the target 20 to obtain a first picture (Step S331).

The processing unit 190 receives the first picture, and performs feature analysis on the first picture to obtain a feature image of the first picture (which is called the first feature image in the following for convenience of description) (Step S351).

After the first picture is captured, the drive unit 150 further drives the moving member 110 to approach the target 20, so that the moving member 110 carries the picture capturing module 170 to move from the first position to a next position (that is, a second position) (Step S313).

Then, in the current position (the second position at the moment), the picture capturing module 170 is used to capture a picture of the target 20 again to obtain a second picture (Step S333).

The processing unit 190 receives the second picture, and performs feature analysis on the second picture to obtain a feature image of the second picture (which is called the second feature image in the following for convenience of description) (Step S353).

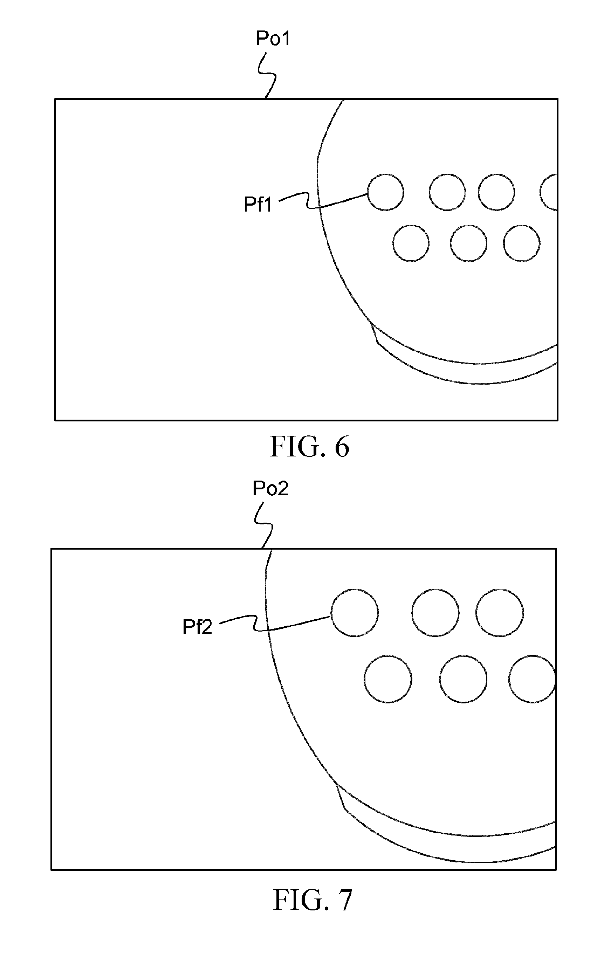

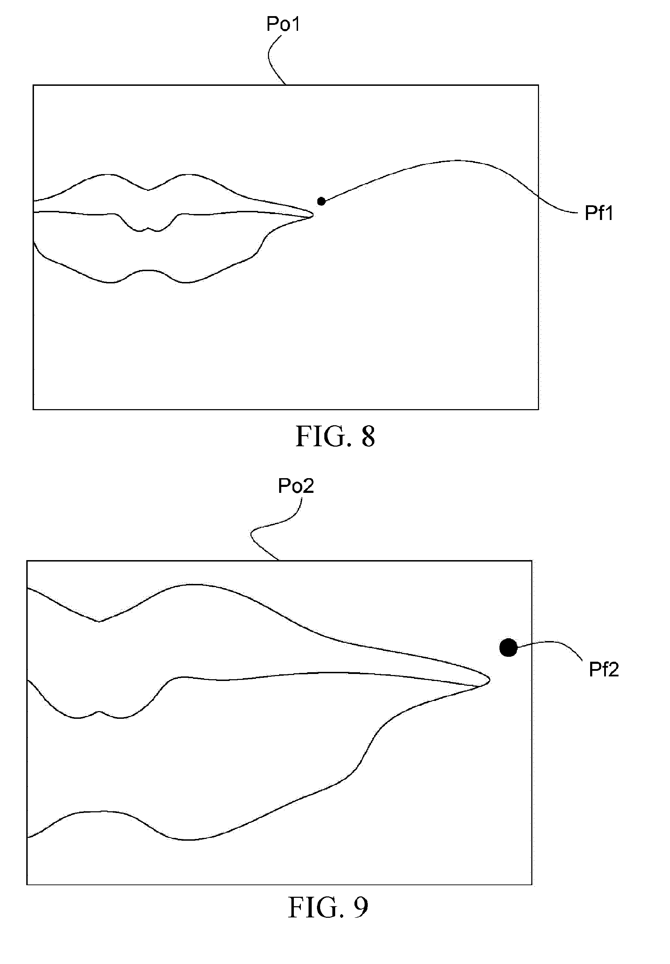

In some embodiments, a first picture Po1 includes a first feature image Pf1 corresponding to a feature of the target 20, as shown in FIG. 6 and FIG. 8. A second picture Po2 includes a second feature image Pf2 corresponding to a feature of the target 20, as shown in FIG. 7 and FIG. 9. Further, the second feature image Pf2 in the second picture Po2 and the first feature image Pf1 in the first picture Po1 correspond to the same feature of the target 20.

For example, the target 20 is a vase. please refer to FIG. 6 and FIG. 7, in which when the vase (the target 20), has a ring-shaped pattern (a feature of the target 20), the processing unit 190 searches for an image of the ring-shaped pattern (that is, the first feature image Pf1), in the captured first picture Po1 and an image of the same ring-shaped pattern (that is, the second feature image Pf2), in the captured second picture Po2 respectively.

For example, the target 20 is a human face. Please refer to FIG. 8 and FIG. 9, when the human face (the target 20), has a mole (a feature of the target 20), the processing unit 190 searches for an image of the mole (that is, the first feature image Pf1), in the captured first picture Po1 and an image of the same mole (that is, the second feature image Pf2), in the captured second picture Po2 respectively.

The processing unit 190 computes a size change of the first feature image Pf1 and the second feature image Pf2 (Step S371). Herein, the processing unit 190 may obtain the size change by computing an image magnification, such as an area ratio, a pixel ratio, or a picture length ratio, of the first feature image Pf1 and the second feature image Pf2.

Then, the processing unit 190 computes, according to the computed size change and a movement distance of the moving member 110 (that is, a distance between the first position and the second position), a distance between the moving member 110 and the target 20 when the second picture is captured, that is, a distance between the second position and the target 20 (Step S373).

For example, a magnification of the first picture is indicated by Equation 1 below, and a magnification of the second picture is indicated by Equation 2 below. Further, it can be seen from the first position and the second position that a relationship indicated by Equation 3 exists between P1 and P2.

$$h1/H=P1/Q \qquad \text{Equation 1}$$

$$h2/H=P2/Q \qquad \text{Equation 2}$$

$$P1=P2+X \qquad \text{Equation 3}$$

In the equations, h1 is a picture length of the first picture, H is an object height, P1 is an object distance when the first picture is captured, Q is an image distance of the picture capturing module, h2 is a picture length of the second picture, P2 is an object distance when the second picture is captured, and X is the distance between the first position and the second position. Further, when the second position is closer to the target 20 than the first position, X is a positive value. On the contrary, when the second position is farther from the target 20 than the first position, X is a negative value.

It can be seen from Equation 1, Equation 2, and Equation 3 that a relationship indicated by Equation 4 below exists between the first picture and the second picture.

$$P2 = \frac{X}{\dfrac{h1}{h2} - 1} \qquad \text{Equation 4}$$

In the equation, h1/h2 represents the size change between the first feature image and the second feature image.

In some embodiments, it is assumed that the computed distance is used for determining whether a distance between a specific tool borne on the moving member 110 and a surface of the target 20 is appropriate. When elements are assembled, a front end (a side close to the target 20), of the specific tool is aligned with a lens of the picture capturing module 170; or a relative distance between the specific tool and the lens of the picture capturing module 170 is also taken into account when the processing unit 190 computes the distance (Step S37) or sets a threshold used for determination.

Then, the processing unit 190 compares the computed distance with the threshold (Step S39), so as to determine whether the computed distance is greater than the threshold (Step S40).

When the distance is greater than the threshold, the processing unit 190 determines that the moving member 110 is not positioned (Step S44). In this case, the drive unit 150 further drives the moving member 110 to move towards the target 20, so that the moving member 110 moves to a next position (Step S313). Then, the disposed picture capturing module 170 is used to capture a picture of the target 20 again to obtain a next picture (Step S333). At the moment, in steps (Step S35 and Step S37) that follow, the previous second picture (that is, the picture captured in previous Step S333), may be used as the first picture of this process, and the new picture captured in Step S333 of this time may be used as the second picture of this process. In this case, feature analysis is not required to be performed on the first picture again (Step S351), and instead in Step S371, a previously obtained feature analysis result is directly used (that is, the second feature image obtained by analyzing in previous Step S353 is used as the first feature image of this time), for calculation.

When the distance is smaller than or equal to the threshold, the processing unit 190 determines that the moving member 110 is positioned (Step S41). If the moving member 110 is not required to move for a next positioning point (Step S45), the processing unit 190 controls the drive unit 150 to stop the moving member 110. If the moving member 110 is required to move for a next positioning point (Step S45), the processing unit 190 controls the drive unit 150 to drive the moving member 110 to move to the next positioning point, that is, Step S311 is returned to and the steps are executed again.

In some embodiments, the threshold may be within a specific range defined by a first value and a second value. The first value is smaller than the second value.

In other words, the processing unit 190 compares the computed distance with the specified range (Step S39).

When the computed distance falls between the first value and the second value, that is, is equal to the first value or the second value or is greater than the first value and smaller than the second value (Step S40), the processing unit 190 determines that the moving member 110 is positioned (Step S41).

When the computed distance is smaller than the first value (Step S40), the processing unit 190 determines that the moving member 110 is not positioned (Step S44), and controls the drive unit 150 to further drive the moving member 110 to move in a direction leaving the target 20, so that the moving member 110 moves to a next position, that is, Step S313 is returned to and the steps are executed again.

When the computed distance is greater than the second value (Step S357), the processing unit 190 determines that the moving member 110 is not positioned (Step S44), and controls the drive unit 150 to further drive the moving member 110 to move towards the target 20, so that the moving member 110 moves to a next position, that is, Step S313 is returned to and the steps are executed again.

In some embodiments, when the target 20 does not have any feature thereon, a probe may be used to determine whether positioning is achieved (that is, an implementation of analyzing an edge change in the picture).

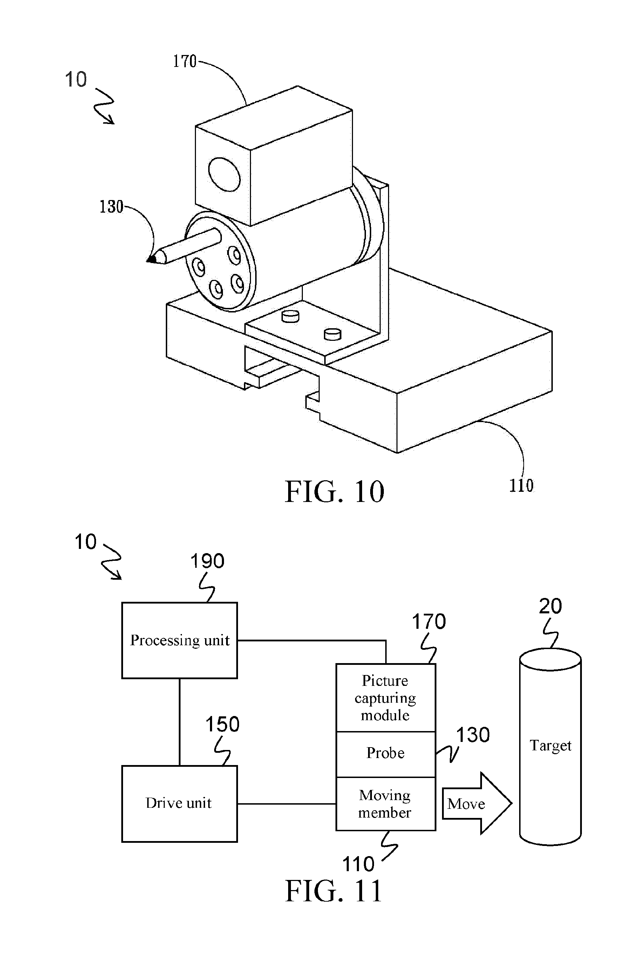

Please refer to FIG. 10 and FIG. 11, in which the moving device 10 may further include a probe 130. The probe 130 is disposed on the moving member 110.

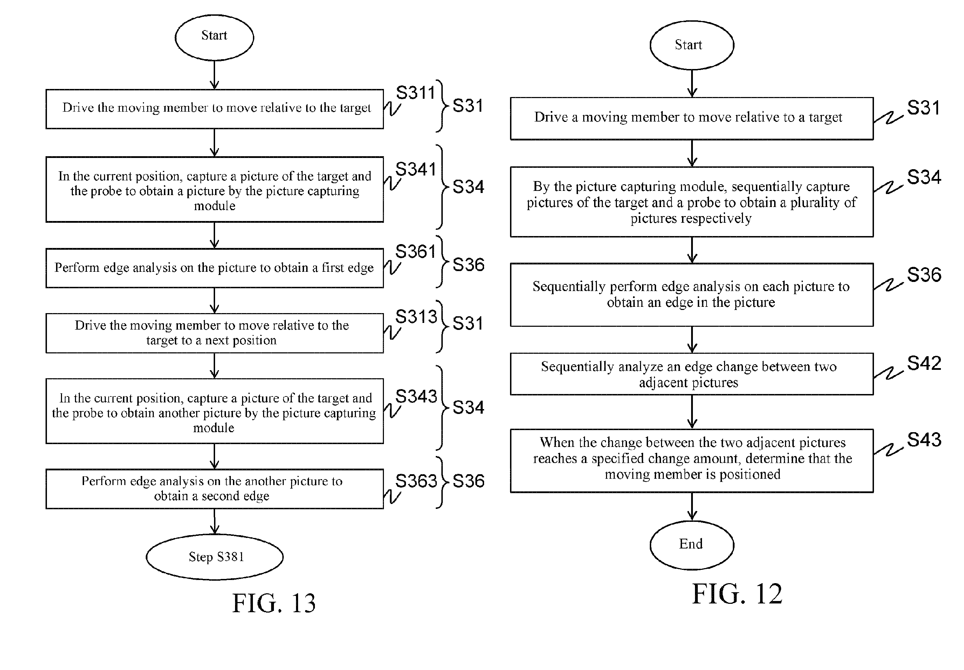

Please refer to FIG. 12, in which when the drive unit 150 drives the moving member 110 to move, the moving member 110 at the same time carries the picture capturing module 170 and the probe 130 to move relative to the target 20 (Step S31).

During movement of the moving member 110, the picture capturing module 170 sequentially captures pictures of the target 20 and the probe 130 to obtain multiple pictures (Step S34). In other words, the picture captured by the picture capturing module 170 further includes the image of the probe 130 in addition to the image of the target 20.

The processing unit 190 sequentially performs edge analysis on each picture to obtain an edge in the picture (Step S36), and sequentially analyzes an edge change between two adjacent pictures (Step S42).

When the edge change between the two adjacent pictures reaches a specified change amount, the processing unit 190 determines that the moving member 110 is positioned on the Z-axis (Step S43). If the moving member 110 is not required to move for a next positioning point, the processing unit 190 controls the drive unit 150 to stop the moving member 110. If the moving member 110 is required to move for a next positioning point, the processing unit 190 controls the drive unit 150 to drive the moving member 110 to move to the next positioning point, that is, Step S31 is returned to and the steps are executed again.

The step of analyzing an edge change between each two adjacent pictures is illustrated below for demonstration.

For convenience of description, in the following, a position that is reached first is called a first position, a next position that is reached after the first position is called a second position, a picture that is captured first (that is, a picture captured at the first position), is called a first picture, and a picture that is captured after the first picture (that is, a picture captured at the second position). is called a second picture.

Please refer to FIG. 10, FIG. 11, FIG. 13 and FIG. 14, in which the drive unit 150 drives the moving member 110 to approach the target 20, so that the moving member 110 moves to a position (that is, the first position), and meanwhile carries the probe 130 and the picture capturing module 170 to move towards the target 20 (Step S311).

In the current position (the first position at the moment), the picture capturing module 170 is used to capture a picture of the target 20 and the probe 130 to obtain a picture (that is, the first picture) (Step S341).

After the first picture is captured, the drive unit 150 further drives the moving member 110 to approach the target 20, so that the moving member 110 moves to a next position (that is, the second position), and meanwhile carries the probe 130 to move towards the target 20 (Step S313).

Then, in the current position (the second position at the moment), the picture capturing module 170 is further used to capture a picture of the target 20 and the probe 130 to obtain another picture (that is, the second picture) (Step S343).

Among pictures captured in Step S341 and Step S343, some have partial images of the target 20 and images of the probe 130.

The processing unit 190 performs edge analysis on a first picture among two adjacent pictures to obtain a first edge (Step S361), and performs edge analysis on a second picture among the two adjacent pictures to obtain a second edge (Step S363).

Then, the processing unit 190 compares the first edge with the second edge (Step S421), so as to determine a change between the two.

When the change between the first edge and the second edge has a specified change amount (Step S423), the processing unit 190 determines that the moving member 110 is positioned (Step S431).

When no change exists between the first edge and the second edge (Step S423), the drive unit 150 further drives the moving member 110 to move towards the target 20, so that the moving member 110 moves to a next position, and meanwhile carries the probe 130 to move towards the target 20 (Step S313). Then, the disposed picture capturing module 170 is used to capture a picture of the target 20 and the probe 130 again to obtain a next picture (Step S343). At the moment, in Step S42 that follow, the previous second picture (that is, the picture captured in previous Step S343), may be used as the first picture of this process, and the new picture captured in Step S343 of this time may be used as the second picture of this process. In this case, edge analysis is not required to be performed on the first picture again (Step S361), and instead in Step S421 a previously obtained edge analysis result is directly used (that is, the second edge obtained by analyzing in previous Step 363), for comparison.

In some embodiments, when the change between the first edge and the second edge has a specified change amount, it indicates that the probe 130 already contacts the target 20, and it is determined that the moving member 110 is positioned.

When no change exists between the first edge and the second edge, it indicates that the probe 130 does not contact or just contacts the target 20, so that the moving member 110 may further be driven to move towards the target 20.

In some embodiments, the specified change amount may be within a specified range defined by a first threshold and a second threshold. The first threshold is smaller than the second threshold.

In other words, the processing unit 190 computes a change amount between the first edge and the second edge, and compares the change amount between the first edge and the second edge with the specified range (Step S421).

When the change amount between the first edge and the second edge falls between the first threshold and the second threshold, that is, is equal to the first threshold or the second threshold or is greater than the first threshold and smaller than the second threshold (Step S423), the processing unit 190 determines that the moving member 110 is positioned (Step S431).

When the change amount between the first edge and the second edge is smaller than the first threshold (Step S423), the processing unit 190 determines that the moving member 110 is not positioned. In this case, the drive unit 150 further drives the moving member 110 to move towards the target 20, so that the moving member 110 moves to a next position, and meanwhile carries the probe 130 to move towards the target 20 (Step S313).

When the change amount between the first edge and the second edge is greater than the second threshold (Step S423), the processing unit 190 determines that the moving member 110 is not positioned. In this case, the drive unit 150 further drives the moving member 110 to move in a direction leaving the target 20, so that the moving member 110 moves to a next position, and meanwhile carries the probe 130 to move leaving the target 20 (Step S313).

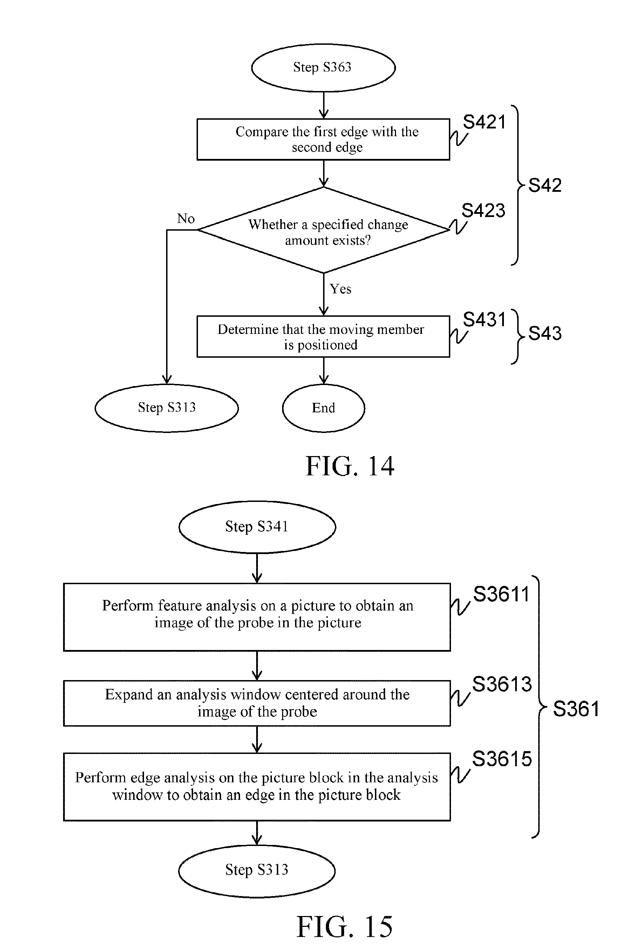

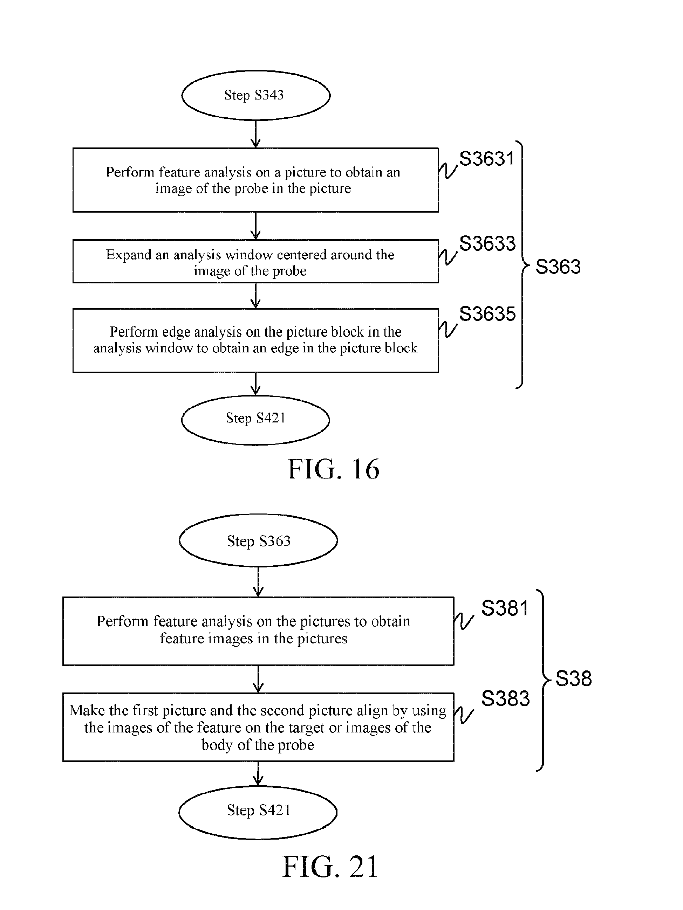

In some embodiments, please refer to FIG. 15 and FIG. 16, in which during edge analysis of each picture (Step S361 or Step S363), the processing unit 190 may first perform feature analysis on the picture to obtain an image of the probe in the picture (Step S3611 or Step S3631), and expand an analysis window centered around the image of the probe (Step S3613 or Step S3633). The analysis window has a specified size smaller than a picture size of the picture.

Then, the processing unit 190 performs edge analysis on a picture block in the analysis window to obtain an edge in the picture block (Step S3615 or Step S3635).

In some embodiments, before the comparison step (Step S421) is performed, the processing unit 190 may first perform size adjustment on one of two consecutively obtained pictures (or edge images thereof), so that the two consecutively obtained pictures (or the edge images thereof), have a same magnification.

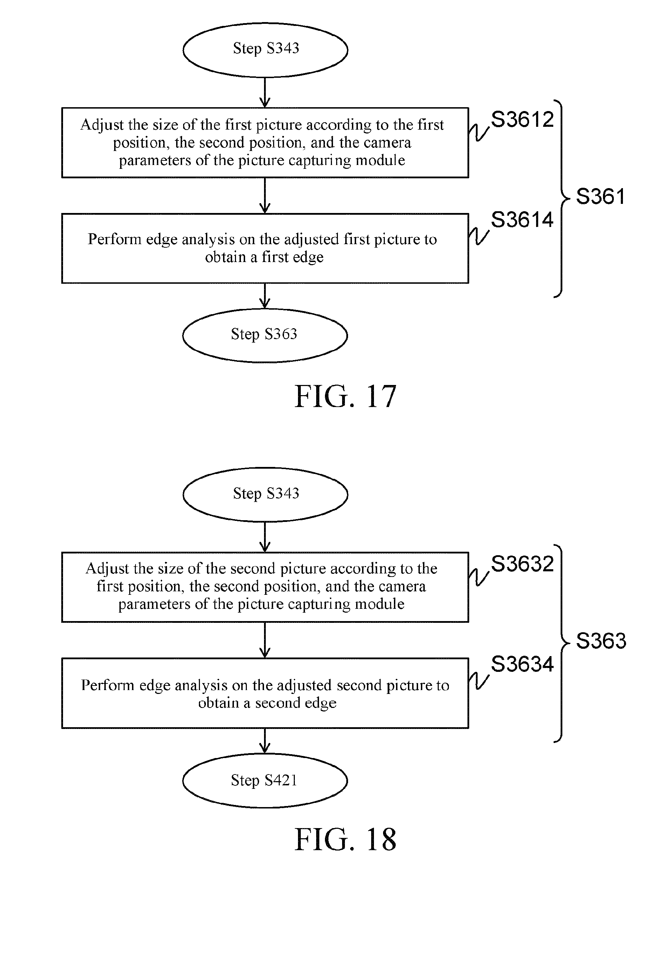

In some embodiments, please refer to FIG. 17 and FIG. 18, in which in a picture edge analysis procedure (that is, Step S361 or Step S363), the processing unit 190 may first adjust the picture size of the first picture or the second picture according to the first position, the second position, and camera parameters (such as a focal length and an image distance), of the picture capturing module 170 (Step S3612 or Step S3632), so that the first picture and the second picture have the same magnification. Then, the processing unit 190 performs edge analysis on the adjusted first picture or the adjusted second picture to obtain an edge in the picture (the first edge or the second edge) (Step S3614 or Step S3634).

When the processing unit 190 adjusts the size of the first obtained picture (that is, the first picture), the step of performing edge analysis on the first picture (Step S361) is required to be executed after the processing unit 190 obtains information of the second position (that is, after Step S313).

When a distance between the first position and the target 20 is greater than a distance between the second position and the target 20, for adjustment of the picture size of the first picture (Step S3612), the processing unit 190 zooms in the first picture according to the first position, the second position, and the camera parameters of the picture capturing module. Further, when the distance between the first position and the target 20 is greater than the distance between the second position and the target 20, for adjustment of the picture size of the second picture (Step S3632), the processing unit 190 zooms out the second picture according to the first position, the second position, and the camera parameters of the picture capturing module.

On the contrary, when the distance between the first position and the target 20 is smaller than the distance between the second position and the target 20, for adjustment of the picture size of the first picture (Step S3612), the processing unit 190 zooms out the first picture according to the first position, the second position, and the camera parameters of the picture capturing module. Further, when the distance between the first position and the target 20 is greater than the distance between the second position and the target 20, for adjustment of the picture size of the second picture (Step S3632), the processing unit 190 zooms in the second picture according to the first position, the second position, and the camera parameters of the picture capturing module.

For example, a magnification of the first picture is indicated by Equation 5 below, and a magnification of the second picture is indicated by Equation 6 below. Further, it can be seen from the first position and the second position that a relationship indicated by Equation 7 exists between P1 and P2.

$$h1/H = P1/Q \qquad \text{Equation 5}$$

$$h2/H = P2/Q \qquad \text{Equation 6}$$

$$P1 = P2 + X \qquad \text{Equation 7}$$

In the equations, h1 is a picture length of the first picture, H is an object height, P1 is an object distance when the first picture is captured, Q is an image distance of the picture capturing module, h2 is a picture length of the second picture, P2 is an object distance when the second picture is captured, and X is the distance between the first position and the second position.

It can be seen from Equation 5, Equation 6, Equation 7, and Equation 8 that a relationship indicated by Equation 9 below exists between the first picture and the second picture.

$$1/P2 + 1/Q = 1/f2 \qquad \text{Equation 8}$$

$$h1/h2=1+X/P2=1+X(1/f2+1/Q) \qquad \text{Equation 9}$$

In the equations, f2 is the focal length when the second picture is captured.

Therefore, the processing unit 190 may adjust the picture size or the edge image size according to Equation 9.

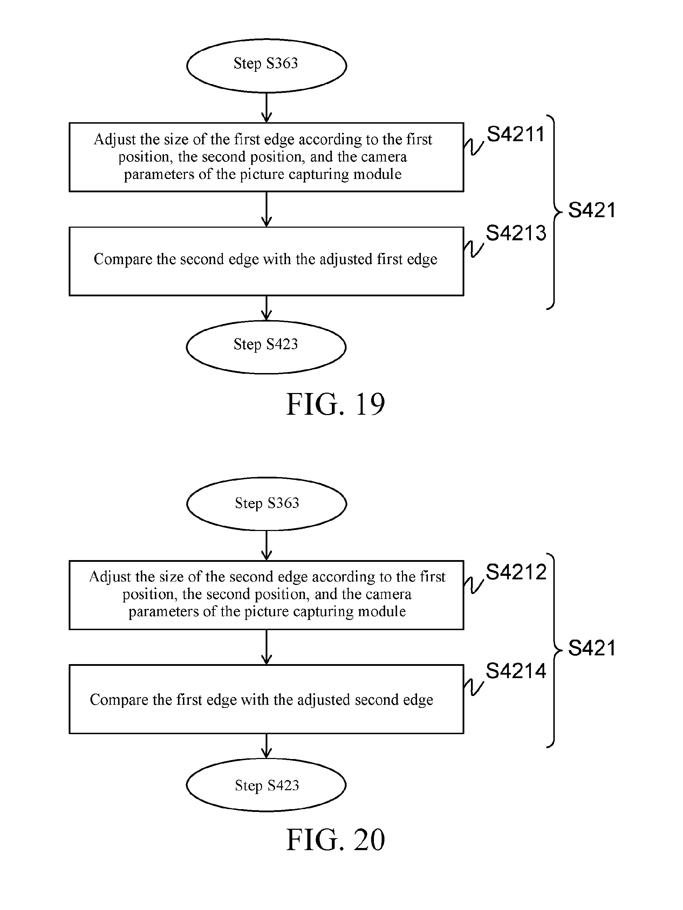

In some embodiments, please refer to FIG. 19, in which the processing unit 190 may directly adjust the size of the edge image of the first edge according to the first position, the second position, and the camera parameters of the picture capturing module (Step S4211), and then compare the second edge with the adjusted first edge to analyze a change between the two (Step S4213).

In some embodiments, please refer to FIG. 20, in which the processing unit 190 may directly adjust the size of the edge image of the second edge according to the first position, the second position, and the camera parameters of the picture capturing module (Step S4212), and then compare first edge with the adjusted second edge to analyze a change between the two (Step S4214).

In some embodiments, the edge change (the change between the first edge and the second edge), may correspond to a deformation incurred to the probe 130 by contact with the target 20, or an indentation (for example, a recess or lines), incurred to the target 20 by pressing of the probe 130.

For example, if the probe 130 is not deformed when the second picture is captured, the position of the first edge in the first picture (that is, an edge of the image of the probe 130). and the position of the second edge in the second picture (that is, an edge of the image of the probe 130), are substantially the same, that is, the position of the second edge falls on the corresponding position of the first edge in the second picture.

If the probe 130 is deformed due to contact with the target 20 when the second picture is captured, the position of the first edge and the position of the second edge do not correspond, that is, the position of the second edge offsets and is therefore not in the corresponding position of the first edge.

Herein, please refer to FIG. 21, before the comparison step (Step S421) is performed, the processing unit 190 may first make the first picture and the second picture align (Step S38).

In the alignment step (Step S38), the processing unit 190 performs feature analysis on the first picture and the second picture to obtain images of a same feature of the first picture and the second picture (for example, images of a special mark on the target 20 or images of a body of the probe 130) (Step S381), and uses the images of the feature on the target 20 or the images of the body connected to the probe 130 to make the first picture and the second picture align (Step S383). Then, the processing unit 190 further performs the step of comparing the first edge with the second edge (Step S421).

In another case, if the probe 130 does not press the target 20 when the second picture is captured, the number of pixels of the first edge in the first picture (that is, the edge of the image of the probe 130), is substantially the same as the number of pixels of the second edge in the second picture (that is, the edge of the image of the probe 130).

If an indentation is incurred to the target 20 by the probe 130 pressing the target 20 when the second picture is captured, the number of pixels of the first edge in the first picture (that is, the edge of the image of the probe 130) is smaller than the number of pixels of the second edge in the second picture (that is, the edge of the image of the probe 130 and an edge of an image of the indentation).

Further, even if the probe 130 presses the target 20 when the first picture is captured and when the second picture is captured, the movement distances of the moving member 110 are different, and the depth by which the probe 130 presses when the first picture is captured is different from that when the second picture is captured, so that the size of the indentation incurred to the target 20 changes accordingly. For example, as the depth increases, the size of the indentation increases (a recess deepens or the number of lines increases). In this case, the number of pixels of the edge in the first picture is different from the number of pixels of the edge in the second picture because the sizes of the indentation are different (for example, as the size increases, the number of pixels increases).

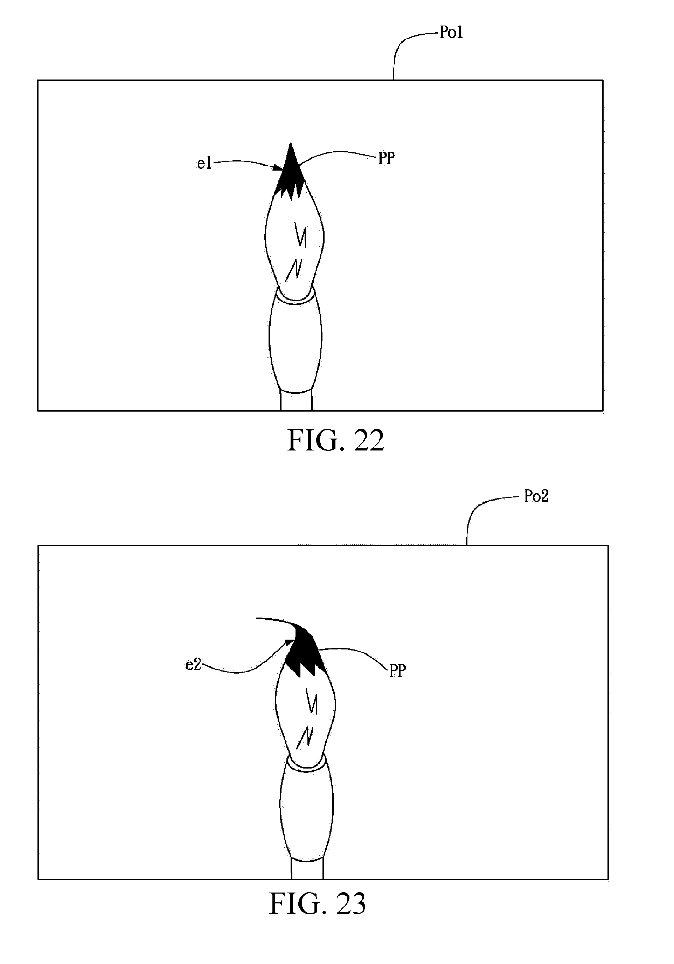

For example, the probe 130 is a writing brush and the target 20 is a cheek of a user, and when the moving member 110 is in the first position, the writing brush (the probe 130) does not contact the cheek of the user (the target 20). At the moment, a first picture Po1 captured by the picture capturing module 170 in the first position includes an image Pp of a tip of the writing brush (that is, an image of the probe 130), as shown in FIG. 22. Please refer to FIG. 22, in which after edge analysis is performed on the first picture Po1, the obtained first edge is a tip edge e1 of the image Pp of the tip of the writing brush.

Then, when the moving member 110 is in the second position, the writing brush (the probe 130), contacts the cheek of the user (the target 20). At the moment, a second picture Po2 captured by the picture capturing module 170 in the second position also includes the image Pp of the tip of the writing brush (that is, an image of the probe 130), but the writing brush is deformed because of pressing the cheek, as shown in FIG. 23. Please refer to FIG. 23, in which after edge analysis is performed on the second picture Po2, the obtained second edge is a tip edge e2 of the image Pp of the tip of the writing brush.

When the tip edge e1 is compared with the tip edge e2, it can be seen that positions of a part of pixels in the tip edge e2 are different from those of the corresponding pixels in the tip edge e1. In other words, a change amount between the first edge and the second edge (that is, the number of pixels with the corresponding positions being different), falls between the first threshold and the second threshold, so that the processing unit 190 determines that the moving member 110 is positioned in the position on the Z-axis.

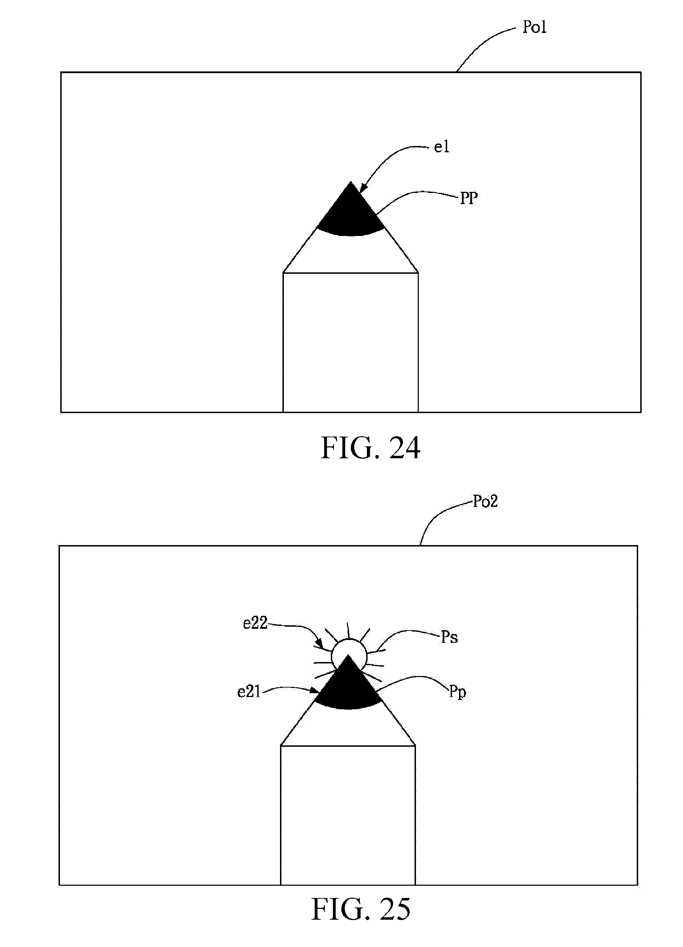

For another example, the probe 130 is an eyebrow pencil, and when the moving member 110 is in the first position, the eyebrow pencil (the probe 130) does not contact a cheek of a user (the target 20). At the moment, a first picture Po1 captured by the picture capturing module 170 in the first position includes an image Pp of a tip of the eyebrow pencil (that is, an image of the probe 130), as shown in FIG. 24. Please refer to FIG. 24, in which after edge analysis is performed on the first picture Po1, the obtained first edge is a tip edge e1 of the image Pp of the tip of the eyebrow pencil.

Then, when the moving member 110 is in the second position, the eyebrow pencil (the probe 130), contacts the cheek of the user (the target 20). At the moment, a second picture Po2 captured by the picture capturing module 170 in the second position also includes the image Pp of the tip of the eyebrow pencil (that is, an image of the probe 130), and further includes an image Ps of an indentation incurred by the tip of the eyebrow pencil pressing the cheek, as shown in FIG. 25. Please refer to FIG. 25, after edge analysis is performed on the second picture Po2, the obtained second edge includes a tip edge e21 of the image Pp of the tip of the eyebrow pencil and an indentation edge e22 of the image Ps of the indentation.

When the first edge is compared with the second edge, it can be seen that the second edge has the indentation edge e22 that the first edge does not have. In other words, a change amount between the first edge and the second edge (that is, the number of pixels of the indentation edge e22), falls between the first threshold and the second threshold, so that the processing unit 190 determines that the moving member 110 is positioned in the position on the Z-axis.

The execution order of the steps is not limited by the present invention, and within a reasonable range, some steps may be swapped regarding the execution order or may be executed at the same time.

For example, in some embodiments, after the picture capturing module 170 captures a picture, the processing unit 190 may immediately perform feature analysis on the picture. Alternatively, the processing unit 190 may perform feature analysis on a previous picture when the picture capturing module 170 captures a next picture. In other words, Step S351 may be executed between Step S331 and Step S313, or executed together with Step S313 or Step S353 at the same time, or executed between Step S313 and Step S353.

In some embodiments, after the picture capturing module 170 captures a picture, the processing unit 190 may immediately perform edge analysis on the picture. Alternatively, the processing unit 190 may perform edge analysis on a previous picture when the picture capturing module 170 captures a next picture. In other words, Step S361 may be executed between Step S341 and Step S313, or executed together with Step S313 or Step S363 at the same time, or executed between Step S313 and Step S363.

In some embodiments, Step S33 and Step S34 may be the same step, and when no feature can be found in Step S35, execution of Step S36, Step S42, and Step S43 follows instead, and whether positioning is achieved is determined according to the edge change corresponding to the probe 130.

In some embodiments, the range-finding method according to the present invention may be implemented by a computer program product, so that a computer (that is, the processing unit 190 of any electronic device), is loaded with and executes the program to implement the range-finding method. In some embodiments, the computer program product may be a readable recording medium, and the program is stored in the readable recording medium to be loaded into a computer. In some embodiments, the program may be a computer program product, and transmitted to the computer in a wired manner or wireless manner.

In view of the above, in the range-finding method and the computer program product according to the present invention, a distance between a moving member and a target is determined according to a picture change, so as to accurately and safely determine whether the moving member is positioned.

While the present invention has been described by the way of example and in terms of the preferred embodiments, it is to be understood that the invention need not be limited to the disclosed embodiments. On the contrary, it is intended to cover various modifications and similar arrangements included within the spirit and scope of the appended claims, the scope of which should be accorded the broadest interpretation so as to encompass all such modifications and similar structures.


**Claims**

1.  A range-finding method, comprising:

    driving a moving member to move relative to a target to a first position;
    in the first position, capturing a picture of the target to obtain a first picture by a picture capturing module disposed on the moving member;

performing feature analysis on the first picture to obtain a first feature image of the first picture;

driving the moving member to move from the first position relative to the target to a second position;

in the second position, capturing a picture of the target to obtain a second picture by the picture capturing module;

performing feature analysis on the second picture to obtain a second feature image of the second picture, wherein the first feature image and the second feature image are images of a same feature object of the target; and

by a processing unit, computing a distance between the moving member being in the second position and the target according to a distance between the first position and the second position and a size change between the first feature image and the second feature image.

2. The range-finding method according to claim 1, wherein the size change is an image magnification between the first feature image and the second feature image.

3. The range-finding method according to claim 1 or claim 2, further comprising:

comparing the computed distance with a threshold; and

when the distance is smaller than or equal to the threshold, determining that the moving member is positioned.

4. A computer program product, capable of implementing the range-finding method according to any one of claims 1 to 3 after the program is loaded into and executed by a computer.

5. A range-finding method, comprising:

driving a moving member to move relative to a target to a first position, so that a probe disposed on the moving member moves relative to the target;

in the first position, capturing a picture of the target and the probe to obtain a first picture by a picture capturing module disposed on the moving member;

performing edge analysis on the first picture to obtain a first edge of the first picture;

driving the moving member to move relative to the target, so that the probe moves from the first position relative to the target to a second position;

in the second position, capturing a picture of the target and the probe to obtain a second picture by the picture capturing module;

performing edge analysis on the second picture to obtain a second edge of the second picture;

comparing the first edge with the second edge; and

when the first edge and the second edge have a specified change amount, determining that the moving member is positioned.

6. The range-finding method according to claim 5, wherein the step of performing edge analysis on the second picture to obtain the second edge of the second picture comprises:

adjusting a size of the second picture according to the first position, the second position, and camera parameters of the picture capturing module; and

performing edge analysis on the adjusted second picture to obtain the second edge.

7. The range-finding method according to claim 5 or claim 6, wherein the step of performing edge analysis on the first picture to obtain the first edge of the first picture comprises:

adjusting a size of the first picture according to the first position, the second position, and camera parameters of the picture capturing module; and

performing edge analysis on the adjusted first picture to obtain the first edge.

8. The range-finding method according to any one of claims 5 to 7, wherein the step of comparing the first edge with the second edge comprises:

comparing the number of pixels of the first edge with the number of pixels of the second edge, and when a difference between the number of pixels of the first edge and the number of pixels of the second edge has a specified change amount, determining that the moving member is positioned.

9. The range-finding method according to any one of claims 5 to 8, wherein the first edge is an edge of an image of the probe in the first picture, and the second edge is an edge of an image of the probe in the second picture.

10. The range-finding method according to claim 9, wherein the step of comparing the first edge with the second edge comprises:

using an image of a feature of the target or a body connected to the probe to make the first picture and the second picture align; and
comparing an image position of the first edge with an image position of the second edge, and when a difference between the image positions of the first edge and the second edge has a specified change amount, determining that the moving member is positioned.

11. The range-finding method according to any one of claims 5 to 10, wherein the step of performing edge analysis on the first picture to obtain the first edge comprises:

performing feature analysis on the first picture to obtain an image of the probe;
expanding an analysis window centered around the image of the probe and having a specified size, wherein the specified size is smaller than a picture size of the first picture; and
performing edge analysis on a picture block, in the analysis window, of the first picture to obtain the first edge.

12. The range-finding method according to claim 11, wherein the step of performing edge analysis on the second picture to obtain the second edge of the second picture comprises:

performing feature analysis on the second picture to obtain an image of the probe;
expanding the analysis window centered around the image of the probe and having the specified size, wherein the specified size is smaller than a picture size of the second picture; and
performing edge analysis on a picture block, in the analysis window, of the second picture to obtain the second edge.

13. The range-finding method according to any one of claims 5 to 12, further comprising:

when a change between the first edge and the second edge is smaller than the specified change amount, continuing to drive the moving member to move towards the target.

14. The range-finding method according to any one of claims 5 to 13, further comprising:

when a change between the first edge and the second edge is greater than the specified change amount, driving the moving member to move in a direction leaving the target.

15. A computer program product, capable of implementing the range-finding method according to any one of claims 5 to 14 after the program is loaded into and executed by a computer.

FIG. 1

FIG. 2

Start

Drive a moving member to move relative to a target ⟍S31

By the picture capturing module, sequentially capture pictures of the target to obtain a plurality of pictures respectively ⟍S33

Perform feature analysis on each picture to obtain a feature image, corresponding to a same feature of the target, in the picture ⟍S35

Sequentially calculate a distance between the moving member and the target according to a size change between feature images of two adjacent pictures and a movement distance of the moving member between the two adjacent pictures are captured ⟍S37

Compare the threshold with the calculated distance ⟍S39

Yes ← Greater than the threshold? ⟍S40

No

The moving member is positioned ⟍S41

End

FIG. 3

```
                    ┌─────────┐
                    │  Start  │
                    └─────────┘
                         │
                         ▼
┌──────────────────────────────────────────┐
│ Drive the moving member to carry the      │      S311 ⎞
│ picture capturing module to move relative │   ↗        ⎬ S31
│ to the target                             │           ⎠
└──────────────────────────────────────────┘
                         │
                         ▼
┌──────────────────────────────────────────┐
│ In the current position, capture a        │      S331 ⎞
│ picture of the target to obtain a picture │   ↗        ⎬ S33
│ by the picture capturing module           │           ⎠
└──────────────────────────────────────────┘
                         │
                         ▼
┌──────────────────────────────────────────┐
│ Perform feature analysis on the picture   │      S351 ⎞
│ to obtain a feature image, corresponding  │   ↗        ⎬ S35
│ to a feature of the target, in the picture│           ⎠
└──────────────────────────────────────────┘
                         │
                         ▼
┌──────────────────────────────────────────┐
│ Drive the moving member to move relative  │      S313 ⎞
│ to the target to a next position          │   ↗        ⎬ S31
│                                           │           ⎠
└──────────────────────────────────────────┘
                         │
                         ▼
┌──────────────────────────────────────────┐
│ In the current position, capture a        │      S333 ⎞
│ picture of the target to obtain another   │   ↗        ⎬ S33
│ picture by the picture capturing module   │           ⎠
└──────────────────────────────────────────┘
                         │
                         ▼
┌──────────────────────────────────────────┐
│ Perform feature analysis on the another   │      S353 ⎞
│ picture to obtain a feature image,        │   ↗        ⎬ S35
│ corresponding to the same feature of the  │           ⎠
│ target, in the picture                    │
└──────────────────────────────────────────┘
                         │
                         ▼
                   ┌───────────┐
                   │ Step S371 │
                   └───────────┘
```

FIG. 4

Step S353

Calculate a size change of the first feature image
and the second feature image     S371

Calculate, according to the calculated size change
and a movement distance of the moving member,
a distance between the moving member and the
target when the second picture is captured    S373

S37

Compare the threshold with the calculated distance   S39

Greater than the threshold?   S40

Yes

No

The moving
member is not
positioned   S44

The moving
member is
positioned   S41

S45   Does a next positioning
point exist?

Yes

No

Step S313

Step S311

End

FIG. 5

Po1

Pf1

FIG. 6

Po2

Pf2

FIG. 7

Po1

Pf1

FIG. 8

Po2

Pf2

FIG. 9

10

170

130

## FIG. 10

110

10

190

Processing unit

170

Picture capturing module

20

150

Probe

130

Target

Drive unit

Moving member

Move

110

## FIG. 11

EP 2 755 186 A2

Start

Drive the moving member to move relative to the target — S311 } S31

In the current position, capture a picture of the target and the probe to obtain a picture by the picture capturing module — S341 } S34

Perform edge analysis on the picture to obtain a first edge — S361 } S36

Drive the moving member to move relative to the target to a next position — S313 } S31

In the current position, capture a picture of the target and the probe to obtain another picture by the picture capturing module — S343 } S34

Perform edge analysis on the another picture to obtain a second edge — S363 } S36

Step S381

FIG. 13

Start

Drive a moving member to move relative to a target — S31

By the picture capturing module, sequentially capture pictures of the target and a probe to obtain a plurality of pictures respectively — S34

Sequentially perform edge analysis on each picture to obtain an edge in the picture — S36

Sequentially analyze an edge change between two adjacent pictures — S42

When the change between the two adjacent pictures reaches a specified change amount, determine that the moving member is positioned — S43

End

FIG. 12

Step S363

Compare the first edge with the
second edge
S421 $\Big\}$

No ← Whether a specified change
amount exists? S423 $\Big\}$ S42

Yes

Determine that the moving member
is positioned
S431 $\Big\}$ S43

Step S313          End

## FIG. 14

Step S341

Perform feature analysis on a picture to obtain an
image of the probe in the picture
S3611 $\Big\}$

Expand an analysis window centered around the
image of the probe
S3613 $\Big\}$ S361

Perform edge analysis on the picture block in the analysis
window to obtain an edge in the picture block
S3615 $\Big\}$

Step S313

## FIG. 15

Step S343

Perform feature analysis on a picture to obtain an image of the probe in the picture $\quad$ S3631

Expand an analysis window centered around the image of the probe $\quad$ S3633 $\quad$ S363

Perform edge analysis on the picture block in the analysis window to obtain an edge in the picture block $\quad$ S3635

Step S421

FIG. 16

Step S363

Perform feature analysis on the pictures to obtain feature images in the pictures $\quad$ S381

Make the first picture and the second picture align by using the images of the feature on the target or images of the body of the probe $\quad$ S383 $\quad$ S38

Step S421

FIG. 21

Step S343

Adjust the size of the first picture according to the first position, the second position, and the camera parameters of the picture capturing module    S3612

Perform edge analysis on the adjusted first picture to obtain a first edge    S3614

S361

Step S363

FIG. 17

Step S343

Adjust the size of the second picture according to the first position, the second position, and the camera parameters of the picture capturing module    S3632

Perform edge analysis on the adjusted second picture to obtain a second edge    S3634

S363

Step S421

FIG. 18

Step S363

Adjust the size of the first edge according to the first position, the second position, and the camera parameters of the picture capturing module  ⟿ S4211

Compare the second edge with the adjusted first edge  ⟿ S4213

} S421

Step S423

FIG. 19

Step S363

Adjust the size of the second edge according to the first position, the second position, and the camera parameters of the picture capturing module  ⟿ S4212

Compare the first edge with the adjusted second edge  ⟿ S4214

} S421

Step S423

FIG. 20

FIG. 22

FIG. 23

Po1

e1

PP

FIG. 24

Po2

e22

Ps

e21

Pp

FIG. 25